# EUROPEAN PATENT SPECIFICATION

(11) **EP 0 614 928 B1**
(45) Date of publication and mention of the grant of the patent: **02.02.2000**
(21) Application number: 94200610.7
(22) Date of filing: 09.03.1994
(51) Int. Cl.: C08G 67/02

(54) **Process for the preparation of copolymers of carbon monoxide and ethylenically unsaturated compounds**
Verfahren zur Herstellung von Copolymeren aus Kohlenmonoxid und ethylenisch ungesättigten Verbindungen
Procédé de préparation de copolymères de monoxyde de carbone et de composés ethyléniquement insaturés

(30) Priority: 12.03.1993 EP 93200737
(43) Date of publication of application: 14.09.1994
(73) Proprietor: SHELL INTERNATIONALE RESEARCH MAATSCHAPPIJ B.V., 2596 HR Den Haag (NL)
(72) Inventor: Keijsper, Johannes Jacobus, NL-1031 CM Amsterdam (NL); Buys, Andre, NL-1031 CM Amsterdam (NL); Bradford, Arleen Marie, NL-1031 CM Amsterdam (NL)

(56) References cited:
- EP-A- 0 235 865
- EP-A- 0 248 483
- EP-A- 0 506 168
- EP-A- 0 512 647
- EP-A- 0 516 238

## Description

The invention relates to a process for the preparation of co-polymers of carbon monoxide with one or more ethylenically unsaturated compounds comprising ethene.

The preparation of co-polymers of carbon monoxide and one or more ethylenically unsaturated compounds comprising ethene, in which co-polymers the units originating from carbon monoxide substantially alternate with the units originating from the ethylenically unsaturated compounds, has been described in numerous patent publications.

Typically the preparation of the said co-polymers is carried out as a liquid phase co-polymerization process, whereby the monomers are contacted with a catalyst composition in the presence of a liquid non-polymerizable diluent. The formed co-polymers are isolated, for instance, by filtration or centrifugation. Pure diluent is recovered from the remaining liquor, suitably by distillation and can be recycled.

A process whereby the polymerization proceeds in solution or suspension is described e.g. in EP-A-181014. In this process the monomers react in the presence of a catalyst, being a complex compound obtained by reaction of a palladium, cobalt or nickel compound, an anion of a carboxylic acid with a pKa lower than 2, and a bidentate ligand.

Invariably, the anion component of the catalyst composition is provided as the carboxylic acid.

Another liquid phase process for the preparation of the said co-polymers is described in EP-A-235865. In this process again use is made of a catalyst composition based on a palladium compound and a bidentate ligand. However, instead of supplying an acid with a pKa lower than 2, a non-noble transition metal salt of the relevant acid is used to form the catalyst composition. It is stated that replacement of the acid by the salt in some cases results in a considerable improvement in catalytic activity of the composition. Whilst salts of all non-noble transition metals are deemed to be included, special preference is given to salts of zirconium, vanadium, chromium, iron, nickel, copper, cerium, thorium and uranium.

It is further known that the preparation of linear, alternating co-polymers of carbon monoxide and one or more ethylenically unsaturated compounds can also be carried out in gas-phase operation. According to EP-A-248483, the gas phase co-polymerization offers considerable advantages, as regards reaction rate, molecular weight and bulk density, in comparison with the liquid phase embodiments of the process. Moreover, the recovery of the formed co-polymers is simpler, because the filtration or centrifugation step can be omitted and no distillative removal of liquid diluent is applicable. When carried out on a technical scale, these advantages result in considerable cost savings.

The catalyst composition, used in the gas-phase process according to the said EP-A-248483, likewise is based on a palladium compound, an anion of an acid with a pKa of less than 2 and a bidentate ligand. It is stated that the anions may be incorporated in the catalyst composition either in the form of an acid or in the form of a salt. Eligible are salts of non-noble transition metals and main group metals. As very suitable are mentioned salts of zirconium, vanadium, chromium, iron, nickel, copper, cerium, thorium, uranium, aluminium, gallium, tin, lead and antimony.

In the latter document acids and metal salts are indicated as suitable alternative anion sources for obtaining the catalyst composition and it is not alleged that by using a metal salt as anion source the catalytic activity of the composition will be enhanced which is in contrast to the findings according to EP-A-235865 for liquid phase operation of the process, as discussed above.

In fact, further investigation of this aspect has shown that most of the metal salts, considered useful for enhancing catalytic activity in liquid phase operation of the process, including many salts of those metals, especially preferred for this purpose, do not have any promoting effect on the catalytic activity in gas phase embodiments of the process.

Surprisingly, it has now been found that the activity of catalyst compositions, used in gas-phase operations of the process, is significantly increased, if compositions are used which are based on specific cation sources, in particular in combination with specific anion sources.

The invention may be defined as relating to a process for the preparation of co-polymers by reacting carbon monoxide and one or more ethylenically unsaturated compounds comprising ethene under gas-phase polymerization conditions and in the presence of a catalyst system based on
(a) a source of cations of one or more noble metals of Group VIII of the Periodic Table;
(b) a source of anions of acids selected from perchloric acid, trifluoromethane sulphonic acid, tetrafluoroboric acid and naphthalene sulphonic acid;
(c) a source of cations of one or more metals selected from the group consisting of nickel, cobalt, manganese, lead, zinc, magnesium, iron (II), copper (II), lanthanium and neodymium; and
(d) a source of bidentate ligands.

In the present specification and claims the term "noble metals of Group VIII of the Periodic Table" denotes the metals ruthenium, rhodium, palladium, osmium, iridium and platinum.

The catalyst systems, suitable for use in the process of the invention, are based, as regards (a), on a source of cations of the said noble metal(s).

Suitable sources of cations of noble metals of Group VIII include salts of mineral acids, such as salts of sulphuric acid, nitric acid and phosphoric acid, and salts of sulphonic acids, such as methanesulphonic acid and para-toluenesulphonic acid.

Preferred sources are salts of carboxylic acids, such as acetic acid, propionic acid and trifluoroacetic acid. If desired, as cation source use may be made of the noble metals in their elemental form, or in a zero-valent state thereof, e.g. in complex form. Usually these sources are applied together with a protic acid, so that the metal cations are formed in situ. Also suitable are noble metal compounds containing at least one group, capable of forming a non-covalent bond with the noble metal, in particular compounds which, in addition to a non-covalent bond with a noble metal, comprise a linkage to that metal via a carbon atom.

Catalyst systems, comprising palladium cations are most preferred. A preferred source of these cations is palladium (II) acetate.

As regards (b), the catalyst systems are based on anions of acids selected from perchloric acid, trifluoromethane sulphonic acid, tetrafluoroboric acid and naphthalene sulphonic acid; These anions do not, or only weakly, coordinate with the cations of the noble metal.

The amount of the anions of acids is not critical. Typically they are used in an amount of 0.5 to 200, preferably of 1.0 to 50, more preferably 1.0 to 10 equivalents per gram atom of Group VIII metal.

It has been observed that a decline in reaction rate may, at least partly, be caused by instability of one or more components of the catalyst system. In order to minimize a rate decline it is therefore considered important to select sources of anions which, under the reaction conditions, do not decompose to any significant extent.

Furthermore, it has been observed that in selecting suitable anion sources for the catalyst system of the invention, steric factors may be of relevance as well. Preferably therefore, as regards (b), the catalyst system is based on a source of relatively bulky anions.

Thus, the anions are anions of strong acids selected from perchloric acid, trifluoromethanesulphonic acid, tetrafluoroboric acid and naphthalenesulphonic acid. Perchloric acid is a strong and very stable acid and, accordingly, catalyst systems in which anions of this acid are incorporated, are especially preferred.

As regards (c), the catalyst systems of the invention are based on a source of cations of one or more of the metals selected from the group consisting of nickel, cobalt, manganese, lead, zinc, magnesium, iron (II), copper (II), lanthanum and neodymium. Of these cations, those of the group consisting of cobalt, manganese, nickel, zinc, iron (II), magnesium and lead are preferred, in particular cations of cobalt, manganese and/or nickel.

As source of cations of the said metals, generally a metal salt is selected, which is suitably derived from one of the acids mentioned above in connection with the sources (a) of cations of noble metals of Group VIII and the sources (b) of anions of acids indicated above.

According to a particularly preferred embodiment of the invention, a salt is selected which can provide both an anion, as considered suitable for (b) and a cation, as considered for (c). Thus, preferred catalyst systems are based on metal salts providing anions for (b) and cations for (c), such as nickel perchlorate, nickel trifluoromethanesulphonate, cobalt perchlorate, manganese perchlorate and zinc trifluoromethanesulphonate. In particular preferred are catalyst systems which, as regards (b) and (c), are based on cobalt-, manganese-, or nickel perchlorate.

The amount of metal, in particular in the form of said metal salt, is not critical, but generally the molar quantity thereof is selected in the range of 1 to 50, in particular 1 to 10, per gram atom of noble metal of Group VIII.

As regards (d), the catalyst system of the invention is based on a source of bidentate ligands. It would appear that the presence of two complexing sites in one molecule significantly contributes to the formation of stable catalysts.

A preferred group of bidentate ligands can be indicated by the general formula

R¹R²M¹-R-M²R³R⁴ (I)

In this formula each of M¹ and M² independently represents a phosphorus, arsenic, antimony or nitrogen atom, each of R¹, R², R³ and R⁴ independently represents a substituted or non-substituted hydrocarbyl group and R represents a divalent organic bridging group containing 1 to 5 atoms in the bridge.

Other suitable bidentate ligands are for example bis thiocompounds such as 1,2-bis(ethylthio)ethane and 1,2-bis(propylthio)ethene, mixed ligands such as 1-diphenylphosphino-3-ethylthiopropane and compounds having two nitrogen containing rings such as bipyridine and 1,10-phenanthroline.

In the ligands of formula (I) M¹ and M² preferably represent phosphorus atoms. R¹ , R² , R³ and R⁴ may independently represent optionally substituted alkyl, aryl, alkaryl, aralkyl or cycloalkyl groups. Preferably at least one of R¹ , R² , R³ and R⁴ represents an aromatic group, in particular an aromatic group substituted by one or more polar groups.

Suitable polar groups include halogen atoms, such as fluorine and chlorine, alkoxy groups such as methoxy and ethoxy groups and alkylamino groups such as methylamino-, dimethylamino- and diethylamino groups.

If one or more of R¹, R², R³ and R⁴ represents a substituted aryl group, preference is given to a phenyl group substituted at one or both ortho positions with respect to M¹ or M², with an alkoxy group, preferably a methoxy group.

In the ligands of formula (I), R preferably represents a divalent organic bridging group containing from 2 to 4 bridging atoms, at least two of which are carbon atoms.

Examples of suitable groups R are: -CH₂-CH₂-CH₂-; -CH₂-Si(CH₃)₂-CH₂-; -CH₂-C(CH₃)₂-CH₂; and -CH₂-CH₂-CH₂-CH₂-. Preferably R is a trimethylene group.

The amount of bidentate ligand supplied may vary considerably, but is usually dependent on the amount of noble metal of Group VIII, present in the catalyst system. Recommended amounts of bidentate ligands are in the range of 0.5 to 8, preferably in the range of 0.5 to 2 moles per gram atom of noble metal of Group VIII.

In some embodiments the stability of the catalyst system is increased by incorporating a promotor therein. Suitably, an organic oxidant promoter is used, such as a quinone. Preferred promoters are selected from the group consisting of benzoquinone, naphthoquinone and anthraquinone. The amount of promoter is advantageously in the range of 1-50, preferably in the range of 1 to 10 mol per gram atom of noble metal of Group VIII.

Preferably in the process of the invention use is made of a catalyst system, supported on a carrier, usually in order to facilitate the introduction of the catalyst system into the reactor. Suitable carrier materials may be inorganic, such as silica, alumina or charcoal, or organic such as cellulose or dextrose. Furthermore a polymer material may be used as carrier, such as polyethene, polypropene or a copolymer such as a copolymer of carbon monoxide with an ethylenically unsaturated compound. Conveniently the carrier is impregnated with a solution of the catalyst system in a suitable solvent. Polar solvents are preferred, such as lower alcohols, for example methanol and ethanol, ethers such as diethylether or the dimethylether of diethylene glycol (diglyme) and ketones such as acetone and methylethylketone. It will be appreciated that the amount of solvent used, is relatively small, so that any excess of solvent can easily be removed before or during the initial stage of the co-polymerization process. On the other hand it has been observed, that the presence of a minor amount of liquid during the process has a delaying effect on the deactivation rate of the catalyst system, provided the continuous phase in which the co-polymerization takes place is formed by carbon monoxide and possibly one or more of the other monomers, if present in the reactor in gaseous form.

The amount of catalyst used in the process of the invention may vary between wide limits. Recommended amounts are in the range of 10⁻⁸ to 10⁻², calculated as gram atoms of noble metals(s) of Group VIII, per molecule of ethylenically unsaturated compound to be co-polymerized with carbon monoxide. Preferred amounts are in the range of 10 ⁻⁷ to 10⁻³ on the same basis.

The ethylenically unsaturated compounds used as monomers in the co-polymerization process of the invention anyhow comprise ethene, and in addition may include compounds consisting exclusively of carbon and hydrogen and compounds which in addition comprise one or more hetero atoms, such as unsaturated esters.

Unsaturated hydrocarbons are preferred.

Examples of suitable monomers used in addition to ethene are lower olefins, l.e. olefins containing from 3 to 6 carbon atoms, such as propene and butene-1, cyclic olefins such as cyclopentene, aromatic compounds, such as styrene and alpha-methylstyrene and vinyl esters, such as vinylacetate and vinylpropionate.

Preference is given to ethene and mixtures of ethene and propene.

Generally, the molar ratio between on the one hand carbon monoxide and on the other hand the ethylenically unsaturated compound(s), is selected in the range of 1:5 to 5:1. Preferably the molar ratio is in the range of 1.5:1 to 1:1,5, substantially equimolar ratios being preferred most.

The co-polvmerization process is usually carried out at a temperature between 20 and 200 °C, preferably at a temperature in the range of 30 to 150 °C.

The reaction is conveniently performed at a pressure between 2 and 200 bar, pressures in the range of 20 to 100 bar being preferred.

The co-polymers obtained according to the invention are suitable as thermoplastics for fibres, films or sheets, or for injection moulding, compression moulding and blowing applications.

They may be used for applications in the car industry, for the manufacture of packaging materials for food and drinks and for various uses in the domestic sphere.

The invention will be illustrated by the following examples.

### Example 1

Co-polymerization of carbon monoxide and ethene.

A catalyst solution was prepared as follows: 57.4 mg (1.1 mole eq.) of 1,3-bis[bis(ortho-methoxy)phenylphosphino]propane were dissolved in 2.5 ml of tetrahydrofuran. After complete dissolution, the solution was added to 1.0 mole eq. of palladium (II) acetate (22.0 mg). Subsequently 17.5 ml of methanol was added and the mixture was stirred during 1 hour, to form a clear light brown solution. 2.5 mole eq. of nickel perchlorate was added and subsequently 2.15 mole eq. of naphthoquinone (33.4 mg) was dissolved. Of this solution 2.0 ml was taken and diluted with 2.0 ml of methanol.

The resulting 4.0 ml of diluted catalyst solution, together with 8 gram of a dried, previously prepared terpolymer of carbon monoxide, ethene and propene, was charged to a 0.5 l autoclave equipped with a fixed stirring device and an automatic pressure relief.

Subsequently, the reactor was closed and pressurized at 50 bar with nitrogen. The pressure was released and the autoclave was purged twice with carbon monoxide, (6 bar), after which it was pressurized with carbon monoxide (20 bar) and ethene (20 bar).

The contents of the reactor were heated to 55 °C and the supply of carbon monoxide/ethene feed (molar ratio 1:1) was started.

A solution of 111.3 mg of naphthoquinone in 100 ml of methanol was added at a rate of 2.0 ml/mg palladium and per hour, starting 0.5 hour after the beginning of the reaction (defined as the moment that the temperature of the reaction mixture reached 60 °C).

The co-polymerization reaction was stopped by the automatic pressure relief after a reaction period of 5 hours. The product was recovered, dried overnight in a vacuum oven under a nitrogen purge at 50 °C and weighed.

The average and maximum temperature, the overall and maximum rate and the LVN of the co-polymer are indicated in table 1. LVN is the Limiting Viscosity Number, the intrinsic viscosity, calculated from determined viscosity values, measured for different co-polymer concentrations in m-cresol at 60 °C.

### Examples 2-10

In each of these experiments, a co-polymer of carbon monoxide and ethene was prepared, substantially as described in Example 1, with the difference that instead of nickel perchlorate, 2.5 mole eq. of the following metal salts were used:
- Example 2: Lanthanum perchlorate
- Example 3: copper (II) perchlorate
- Example 4: cobalt perchlorate
- Example 5: zinc perchlorate
- Example 6: ferrous perchlorate
- Example 7: manganese perchlorate
- Example 8: magnesium perchlorate
- Example 9: lead perchlorate
- Example 10: neodymium perchlorate

The results (temperature, catalyst activity and LVN) are shown in table 1.

### Comparative Example A (not according to the invention)

A co-polymer of carbon monoxide and ethene was prepared, substantially as described in Example 1, with the difference that instead of nickel perchlorate, 2.5 mole eq. of perchloric acid was used.

The results are shown in table 1.

### Comparative Example B (not according to the invention)

A co-polymer of carbon monoxide and ethene was prepared, substantially as described in Example 1, with the difference that instead of nickel perchlorate, 1.7 mole eq. of chromium (III) perchlorate was used.

The results are shown in table 1.

### Examples 11-14

In each of these experiments, a co-polymer of carbon monoxide and ethene was prepared, substantially as described in Example 1, with the difference that instead of nickel perchlorate, 2.5 mole eq of the following metal salts were used:
- Example 11: nickel naphthalenesulphonate
- Example 12: nickel trifluoromethanesulphonate
- Example 13: nickel tetrafluoroborate
- Example 14: zinc trifluoromethanesulphonate

The results are shown in table 2.

### Comparative Example C (not according to the invention)

A co-polymer of carbon monoxide and ethene was prepared substantially as described in Example 11, with the difference that instead of nickel naphthalenesulphonate, 2.5 mole eq. of naphthalenesulphonic acid was used.

The results are shown in table 2.

**Table 1**

| Example No. | Temperature (°C) | | Catalytic activity (kg/g Pd.h) | | LVN(dl/g) |
|---|---|---|---|---|---|
| | average | maximum | overall | maximum | |
| 1 | 91.5 | 92.0 | 16.8 | 18.3 | 2.3 |
| 2 | 90.0 | 91.5 | 12.5 | 14.0 | 2.9 |
| 3 | 93.1 | 96.4 | 14.2 | 16.9 | -- |
| 4 | 89.6 | 93.0 | 16.2 | 19.7 | 2.2 |
| 5 | 91.3 | 93.6 | 15.1 | 18.2 | 2.4 |
| 6 | 90.2 | 93.5 | 14.5 | 17.2 | 2.6 |
| 7 | 89.8 | 93.5 | 15.4 | 18.0 | 2.5 |
| 8 | 91.8 | 94.5 | 14.7 | 17.9 | 2.1 |
| 9 | 90.5 | 94.0 | 15.2 | 17.4 | 2.2 |
| 10 | 89.1 | 92.8 | 11.2 | 14.5 | n.d. |
| A | 86.7 | 91.3 | 7.5 | 9.8 | 2.7 |
| B | 89.9 | 92.9 | 7.1 | 9.6 | 2.6 |

**Table 2**

| Example No. | Temperature (°C) | | Catalytic activity (kg/g Pd.h) | | LVN(dl/g) |
|---|---|---|---|---|---|
| | average | maximum | overall | maximum | |
| 11 | 91.6 | 95.7 | 16.3 | 19.5 | 2.2 |
| 12 | 91.0 | 91.8 | 14.8 | 15.7 | 2.6 |
| 13 | 90.2 | 92.6 | 13.1 | 16.5 | 2.4 |
| 14 | 91.3 | 93.6 | 14.6 | 17.4 | 2.4 |
| C | 91.2 | 93.3 | 6.5 | 7.5 | 2.2 |

### Comparative Example D (not according to the invention)

In the manner as described in Example 1 an experiment was carried out whereby, instead of nickel perchlorate, 2.5 mole eq. of vanadium perchlorate was used. During the preparation of the catalyst solution, decomposition of the vanadium compound occurred, so that the effect, if any, of this metal salt on the catalytic activity could not be determined.

## Claims

1. A process for the preparation of co-polymers by reacting carbon monoxide and one or more ethylenically unsaturated compounds comprising ethene, under gas-phase polymerization conditions and in the presence of a catalyst system based on
(a) a source of cations of one or more noble metals of Group VIII of the Periodic Table;
(b) a source of anions of acids selected from perchloric acid, trifluoromethane sulphonic acid, tetrafluoroboric acid and naphthalene sulphonic acid;
(c) a source of cations of one or more metals selected from the group consisting of nickel, cobalt, manganese, lead, zinc, magnesium, iron (II), copper (II), lanthanum and neodymium; and
(d) a source of bidentate ligands.

2. A process as claimed in claim 1, characterized in that the catalyst system is based, as regards (a), on a salt of palladium and a carboxylic acid, such as palladium (II) acetate, and, as regards (d), on a bidentate ligand of the general formula
R¹R²M¹-R-M²R³R⁴ (I)
wherein M¹ and M² represent phosphorus atoms, each of R¹, R², R³ and R⁴ independently represents a non-substituted or polar substituted aryl group and R represents a bivalent bridging group containing 2 to 4 carbon atoms in the bridge.

3. A process as claimed in claim 2, characterized in that in the bidentate ligand of formula (I), each of R¹, R², R³ and R⁴ represents an ortho-alkoxyphenyl group and R represents a trimethylene group.

4. A process as claimed in any of claims 1-3, characterized in that the catalyst system, as regards (c), is based on a source of cations of one or more metals selected from the group consisting of cobalt, manganese, nickel, zinc, iron (II), magnesium and lead.

5. A process as claimed in claim 4, characterized in that the catalyst system, as regards (b) and (c), is based on cobalt-, manganese-, or nickel perchlorate.

6. A process as claimed in any of claims 1-5, characterized in that the catalyst system is based on, as regards (b), 1.0 to 50 equivalents of anions of the selected acids, as regards (c), 1.0 to 50 gram atom of selected metal(s) and, as regards (d), 0.5 to 8 moles of bidentate ligand, all quantities being defined per gram atom of Group VIII noble metal.

7. A process as claimed in any of claims 1-6, characterized in that the catalyst system additionally comprises a promoter, such as benzoquinone, naphthoquinone or anthraquinone, in a quantity of 1 to 50 mol per gram atom of Group VIII noble metal.

8. A process as claimed in any of claims 1-7, characterized in that the catalyst system is supported on a carrier, such as a co-polymer of carbon monoxide with one or more ethylenically unsaturated compounds.

9. A process as claimed in any of claims 1-8, characterized in that as ethylenically unsaturated compound ethene or a mixture of ethene and propene is used, the reaction is carried out at a temperature in the range of 30 to 150 °C and at a pressure in the range of 20 to 100 bar.

## Patentansprüche

1. Verfahren zur Herstellung von Copolymeren durch Umsetzen von Kohlenmonoxid mit einer oder mit mehreren ethylenisch ungesättigten Verbindungen einschließlich Ethen unter Gasphasenpolymerisationsbedingungen und in Gegenwart eines Katalysatorsystems, das auf
(a) einer Quelle von Kationen eines oder mehrerer Edelmetalle der Gruppe VIII des Periodensystems;
(b) einer Quelle von Anionen von Säuren, ausgewählt unter Perchlorsäure, Trifluormethansulfonsäure, Tetrafluorborsäure und Naphthalinsulfonsäure;
(c) einer Quelle von Kationen eines oder mehrerer Metalle, ausgewählt aus der aus Nickel, Kobalt, Mangan, Blei, Zink, Magnesium, Eisen(II), Kupfer(II), Lanthan und Neodym bestehenden Gruppe; und
(d) einer Quelle von Bidentatliganden aufgebaut ist.

2. Verfahren nach Anspruch 1, dadurch gekennzeichnet, daß das Katalysatorsystem hinsichtlich (a) auf einem Salz von Palladium und einer Carbonsäure, wie Palladium(II)acetat, und hinsichtlich (d) auf einem Bidentatliganden mit der allgemeinen Formel
R¹R²M¹-R-M²R³R⁴ (I)
aufgebaut ist, worin M¹ und M² Phosphoratome darstellen, jeder Rest R¹, R², R³ und R⁴ unabhängig voneinander eine unsubstituierte oder polar substituierte Arylgruppe bedeutet und R eine zweiwertige Brückengruppe mit einem Gehalt an 2 bis 4 Kohlenstoffatomen in der Brücke darstellt.

3. Verfahren nach Anspruch 2, dadurch gekennzeichnet, daß in dem Bidentatliganden der Formel (I) jeder Rest R¹, R², R³ und R⁴ eine ortho-Alkoxyphenylgruppe darstellt und R eine Trimethylengruppe bedeutet.

4. Verfahren nach einem der Ansprüche 1 bis 3, dadurch gekennzeichnet, daß das Katalysatorsystem hinsichtlich (c) auf einer Quelle von Kationen eines oder mehrerer Metalle, ausgewählt aus der aus Kobalt, Mangan, Nickel, Zink, Eisen(II), Magnesium und Blei bestehenden Gruppe, aufgebaut ist.

5. Verfahren nach Anspruch 4, dadurch gekennzeichnet, daß das Katalysatorsystem hinsichltich (b) und (c) auf Kobalt-, Mangan- oder Nickelperchlorat aufgebaut ist.

6. Verfahren nach einem der Ansprüche 1 bis 5, dadurch gekennzeichnet, daß das Katalysatorsystem hinsichtlich (b) auf 1,0 bis 50 Äquivalenten von Anionen der ausgewählten Säuren, hinsichtlich (c) auf 1,0 bis 50 Grammatom des ausgewählten Metalles bzw. der ausgewählten Metalle und hinsichtlich (d) auf 0,5 bis 8 Mol Bidentatligand aufgebaut sind, wobei sämtlich Mengen je Grammatom Gruppe VIII-Edelmetall definiert sind.

7. Verfahren nach einem der Ansprüche 1 bis 6, dadurch gekennzeichnet, daß das Katalsysatorsystem zusätzlich einen Promotor, wie Benzochinon, Naphthochinon oder Anthrachinon, in einer Menge von 1 bis 50 Mol je Grammatom Gruppe-VIII-Edelmetall umfaßt.

8. Verfahren nach einem der Ansprüche 1 bis 7, dadurch gekennzeichnet, daß das Katalysatorsystem auf einen Träger aufgebracht ist, wie ein Copolymer aus Kohlenmonoxid mit einer oder mit mehreren ethylenisch ungesättigten Verbindungen.

9. Verfahren nach einem der Ansprüche 1 bis 8, dadurch gekennzeichnet, daß als ethylenisch ungesättigte Verbindung Ethen oder ein Gemisch aus Ethen und Propen eingesetzt wird und die Reaktion bei einer Temperatur im Bereich von 30 bis 150 °C und bei einem Druck im Bereich von 20 bis 100 bar ausgeführt wird.

## Revendications

1. Procédé de préparation de copolymères par la réaction de monoxyde de carbone et d'un ou plusieurs composés éthyléniquement insaturés comprenant de l'éthène, sous des conditions de polymérisation en phase gazeuse et en présence d'un système de catalyseur à base :
(a) d'une source de cations d'un ou plusieurs métaux nobles du Groupe VIII du Tableau Périodique;
(b) d'une source d'anions d'acides choisis parmi l'acide perchlorique, l'acide trifluorométhanesulfonique, l'acide tétrafluoroborique et l'acide naphtalènesulfonique;
(c) d'une source de cations d'un ou plusieurs métaux choisis dans le groupe comprenant le nickel, le cobalt, le manganèse, le plomb, le zinc, le magnésium, le fer (II), le cuivre (II), le lanthane et le néodymium; et
(d) d'une source de ligands bidentés.

2. Procédé suivant la revendication 1, caractérisé en ce que le système de catalyseur est à base, en ce qui concerne (a), d'un sel de palladium et d'un acide carboxylique, tel que l'acétate de palladium (II), et, en ce qui concerne (d), d'un ligand bidenté de la formule générale :
R¹R²M¹-R-M²R³R⁴ (I)
dans laquelle M¹ et M² représentent des atomes de phosphore, chacun des R¹, R², R³ et R⁴ représente indépendamment un groupe aryle non substitué ou substitué polaire et R représente un groupe de pontage bivalent contenant 2 à 4 atomes dans le pont.

3. Procédé suivant la revendication 2, caractérisé en ce que dans le ligand bidenté de formule (I), chacun des R¹, R², R³ et R⁴ représente un groupe ortho-alcoxyphényle et R représente un groupe triméthylène.

4. Procédé suivant l'une quelconque des revendications 1 à 3, caractérisé en ce que le système de catalyseur, en ce qui concerne (c), est à base d'une source de cations d'un ou plusieurs métaux choisis dans le groupe comprenant le cobalt, le manganèse, le nickel, le zinc, le fer (II), le magnésium et le plomb.

5. Procédé suivant la revendication 4, caractérisé en ce que le système de catalyseur, en ce qui concerne (b) et (c), est à base de perchlorate de cobalt, de manganèse ou de nickel.

6. Procédé suivant l'une quelconque des revendications 1 à 5, caractérisé en ce que le système de catalyseur est à base, en ce qui concerne (b), de 1,0 à 50 équivalents d'anions des acides choisis, en ce qui concerne (c), de 1,0 à 50 atomes-grammes de métal ou métaux choisis et, en ce qui concerne (d), de 0,5 à 8 moles de ligand bidenté, toutes les quantités étant définies par atome-gramme de métal noble du Groupe VIII.

7. Procédé suivant l'une quelconque des revendications 1 à 6, caractérisé en ce que le système de catalyseur comprend de plus un promoteur, comme la benzoquinone, la naphtoquinone ou l'anthraquinone, en une quantité de 1 à 50 moles par atome-gramme de métal noble du groupe VIII.

8. Procédé suivant l'une quelconque des revendications 1 à 7, caractérisé en ce que le système de catalyseur est fixé sur un support, tel qu'un copolymère de monoxyde de carbone avec un ou plusieurs composés éthyléniquement insaturés.

9. Procédé suivant l'une quelconque des revendications 1 à 8, caractérisé en ce que, comme composé éthyléniquement insaturé, on utilise de l'éthène ou un mélange d'éthène et de propène, la réaction est réalisée à une température dans l'intervalle de 30 à 150°C et à une pression dans la gamme de 20 à 100 bars.
